# EUROPÄISCHE PATENTSCHRIFT

(11) **EP 3 331 073 B1**
(45) Veröffentlichungstag und Bekanntmachung des Hinweises auf die Patenterteilung: **15.01.2020**
(21) Anmeldenummer: 16201937.6
(22) Anmeldetag: 02.12.2016
(51) Int. Cl.: H01M 4/86, H01M 12/08, H01M 4/34, H01M 4/38, H01M 4/54, B01J 23/38, H01M 4/88, H01M 4/90

(54) **SEKUNDÄRZELLE, AKKUMULATOR UMFASSEND EINE ODER MEHRERE SEKUNDÄRZELLEN UND VERFAHREN ZUM LADEN UND ENTLADEN**
SECONDARY CELL, BATTERY COMPRISING ONE OR MORE SECONDARY CELLS AND A METHOD FOR LOADING AND DISCHARGING
CELLULE SECONDAIRE, BATTERIE COMPRENANT UNE OU PLUSIEURS CELLULES SECONDAIRES ET PROCÉDÉ DE CHARGE ET DE DÉCHARGE

(43) Veröffentlichungstag der Anmeldung: 06.06.2018
(73) Patentinhaber: Deutsches Zentrum für Luft- und Raumfahrt e.V., 51147 Köln (DE); CIDETEC, 20009 Donostia / San Sebastian (ES)
(72) Erfinder: Wittmaier, Dennis, 71665 Vaihingen (DE); Wagner, Norbert, 86368 Gersthofen (DE); Kube, Alexander, 70794 Filderstadt (DE); Blázquez, Alberto, 20110 Pasajes (ES); Ramos, Aroa, 20305 Irún (ES)
(74) Vertreter: Hoeger, Stellrecht & Partner Patentanwälte mbB

(56) Entgegenhaltungen:
- EP-A2- 1 728 896
- WO-A1-2015/124713
- DE-A1-102011 077 250
- US-A1- 2012 003 549
- US-A1- 2016 322 645

## Beschreibung

Die vorliegende Erfindung betrifft eine Sekundärzelle in Form eines Hybridsystems aus einer Zink-Luft-Batterie und einer Silberoxid-Zink-Batterie, umfassend eine Anode, eine Kathode und einen Elektrolyt.

Die Erfindung betrifft ferner einen Akkumulator, der eine oder mehrere Sekundärzellen umfasst.

Des Weiteren betrifft die Erfindung ein Verfahren zum Laden und ein Verfahren zum Entladen einer Sekundärzelle oder eines Akkumulators.

Metall-Luft-Batterien zeichnen sich gegenüber den meisten anderen Batterietypen durch eine deutlich höhere gravimetrische und volumetrische Energiedichte aus, was insbesondere dadurch bedingt ist, dass nur einer der beiden Reaktionspartner zum Ausgangsgewicht der Zelle beiträgt, während der Sauerstoff aus der Umgebungsluft zugeführt wird. Aus diesem Grund haben Metall-Luftbatterien insbesondere für mobile Anwendungen, z.B. als Energiespeicher in Elektrofahrzeugen, eine große praktische Bedeutung. Am weitesten verbreitet sind in diesem Bereich Lithium-Luft-Batterien bzw. Lithium-Luft-Akkumulatoren, die den weiteren Vorteil aufweisen, dass die elektrochemische Oxidation von Lithium prinzipiell reversibel ist, und dass dieses System auch in der Praxis als Sekundärzelle mit einer Vielzahl von Lade- und Entladezyklen eingesetzt werden kann.

Andererseits ist die Verwendung von Lithium auch mit Nachteilen verbunden, die insbesondere in der begrenzten Verfügbarkeit, den hohen Kosten und der hohen Reaktivität von Lithium (was die Verwendung eines organischen Elektrolyts erforderlich macht) begründet sind. Als alternatives Metall für die Anodenseite einer Metall-Luft-Batterie bietet sich insbesondere Zink an, welches relativ kostengünstig und in ausreichender Menge verfügbar ist. Zudem führt Zink bei der Entsorgung im Vergleich zu Lithium zu einer geringeren Umweltbelastung.

Zink-Luft-Batterien sind aus dem Stand der Technik bekannt, allerdings wiesen sie gegenüber Lithium-Luft-Batterien den entscheidenden Nachteil auf, dass sie in der Praxis nicht oder zumindest nicht wirtschaftlich als Sekundärzellen betrieben werden können, weil die Wiederaufladung mit erheblichen Problemen verbunden ist. Ursachen hierfür sind u.a. die in den Zink-Luft-Batterien verwendeten Kathodenmaterialien, die nur eine geringe katalytische Aktivität für die elektrochemische Sauerstoffbildung aufweisen. Zudem enthalten die Kathoden Kohlenstoff, um die elektrische Leitfähigkeit zu gewährleisten, welches aber unter den Bedingungen der Sauerstoffbildung bereits bei Potentialen knapp oberhalb der offenen Zellspannung korrodiert. Dies führt zu einer Beeinträchtigung der Funktion und schließlich zu einer strukturellen Zersetzung der Kathode.

Der Erfindung liegt daher die Aufgabe zugrunde, auf der Basis einer Zink-Luft-Batterie eine wiederaufladbare Sekundärzelle zur Verfügung zu stellen.

Diese Aufgabe wird bei der Sekundärzelle der eingangs genannten Art erfindungsgemäß dadurch gelöst, dass die Anode Zink (Zn) und/oder Zinkoxid (ZnO₂) enthält, und dass die Kathode als Gasdiffusionselektrode ausgebildet ist, die eine Mischung aus Silber (Ag) und/oder Silberoxid (Ag₂O/AgO) mit einem Katalysator für die elektrochemische Sauerstoffbildung enthält, dadurch gekennzeichnet, dass der Katalysator Cobaltoxid, CO₃O4, enthält.

Die Zusammensetzung der Kathode (Gasdiffusionselektrode) bei der erfindungsgemäßen Sekundärzelle weist verschiedene Vorteile auf, die u.a. zu einer hohen Reversibilität der Zellreaktionen führen. Zum einen weist das elementare Ag eine hohe katalytische Aktivität insbesondere für die elektrochemische Sauerstoffreduktion auf (*ORR, oxygen reduction reaction*), die beim Entladen der Zelle an der Kathode abläuft. Gleichzeitig gewährleistet das Ag die Leitfähigkeit der Kathode, so dass auf einen Zusatz von Kohlenstoff verzichtet werden kann. Damit auch die elektrochemische Sauerstoffbildung (*OER, oxygen evolution reaction*) beim Laden der Sekundärzelle effektiv ablaufen kann, enthält die Mischung den weiteren Katalysator, der aus den genannten Materialien ausgewählt ist und insbesondere die elektrochemische Sauerstoffbildung katalysiert.

Die Kathode der erfindungsgemäßen Sekundärzelle weist damit nicht nur eine hohe katalytische Aktivität sowohl für die Sauerstoffbildung als auch die Sauerstoffreduktion auf, sie ist aufgrund ihrer Zusammensetzung auch korrosionsbeständig und weist eine hohe Stabilität auf.

Das in der Kathode enthaltene Silber und/oder Silberoxid (in Abhängigkeit vom Ladungszustand der Zelle) ist aber nicht nur für die katalytische Aktivität und die Leitfähigkeit der Kathode von Bedeutung, sondern erfüllt zudem eine weitere wesentliche Funktion in der erfindungsgemäßen Sekundärzelle, indem es gemäß dem Prinzip einer Silberoxid-Zink-Batterie einen Beitrag zur Kapazität der Zelle leistet. Somit liegt, wie bereits eingangs erwähnt, ein Hybridsystem aus einer Zink-Luft-Batterie und einer Silberoxid-Zink-Batterie vor.

Dieses Hybridsystem gemäß der Erfindung ist insofern besonders vorteilhaft, als die elektrochemischen Reaktionen unter Beteiligung von Silber und Silberoxid eine geringere kinetische Überspannung aufweisen als die Reduktion und Bildung von Sauerstoff, so dass erstere Reaktionen beim Laden und Entladen der Zelle bevorzugt ablaufen.

Beim Laden der Sekundärzelle erfolgt daher zunächst eine Oxidation von Ag zu Ag₂O und anschließend eine weitere Oxidation des Ag₂O zu AgO gemäß den folgenden Reaktionsgleichungen:
(1) 2 Ag + 2 OH⁻ → Ag₂O + H₂O + 2 e⁻
(2) Ag₂O + 2 OH⁻ → 2 AgO + H₂O + 2 e⁻

Diese Reaktionen laufen aufgrund der geringen Überspannung sehr rasch ab, und auch weil keine Gasdiffusionsprozesse beteiligt sind.

Beim Entladen der Zelle erfolgt dementsrechend als erstes die Reduktion der Silberoxide in der Gegenrichtung dieser Reaktionen.

Wenn die Kapazität des Systems Silber/Silberoxid beim Laden oder Entladen der Zelle erschöpft ist, oder wenn beim Entladen der Zelle der Entladestrom einen bestimmten Wert überschreitet, wird eine weitere, größere Kapazität der Sekundärzelle durch die Bildung bzw. die Reduktion von Sauerstoff aus der Umgebungsluft bereitgestellt, gemäß folgender Reaktionsgleichung (für den Ladevorgang):
(3) 4 OH⁻ → O₂ + 2 H₂O + 4 e⁻

An der Anode läuft die Reduktion von Zinkoxid (beim Ladevorgang) über den Zwischenschritt Zinkhydroxid gemäß den folgenden Reaktionsgleichungen ab:
(4) ZnO + H₂O + 2 OH⁻ → Zn(OH)₄²⁻
(5) zn(OH)₄²⁻ + 2 e⁻ → Zn + 4 OH⁻

Damit ergibt sich folgende Bruttoreaktion für die erste Phase des Ladevorgangs (entsprechend einer Silberoxid-Zink-Batterie):
(6) 2 Ag + 2 Zn(OH)₂ → 2 AgO + 2 Zn + 2 H₂O

Die Bruttoreaktion für die zweite Phase des Ladevorgangs lautet (entsprechend einer Zink-Luft-Batterie):
(7) 2 ZnO → 2 Zn + O₂

Die Verwendung einer Mischung aus Silber und einem Katalysator für die elektrochemische Sauerstoffbildung bei einer Gasdiffusionselektrode ist aus der Druckschrift WO 2015/124713 A1 bereits bekannt, allerdings nicht in Verbindung mit einer Zink/Oxid enthaltenden Anode, sondern insbesondere für eine Lithium-Luft-Batterie. Im Gegensatz zur vorliegenden Erfindung dient das Silber gemäß diesem Stand der Technik nur als leitfähiges und katalytisch aktives Material, ohne dass dort eine Oxidation des Silbers beim Laden der Batterie erfolgt. US2012/003549 offenbart eine Sekundärzelle in Form eines Hybridsystems aus einer Zink-Luft-Batterie und einer Silberoxid-Zink-Batterie mit ZrO₂ als Katalysator.

In der vorliegenden Erfindung enthält der Katalysator Co₃O₄ als Bestandteil, in einer vorteilhaften Ausführungsform als einzigen Bestandteil.

Günstigerweise enthält die Kathode einen Anteil von 5 bis 20 Gew.% des Katalysators, weiter bevorzugt von 10 bis 15 Gew.%. Bei einem zu geringen Anteil des Katalysators ist die katalytische Aktivität der Gasdiffusionselektrode für die Sauerstoffbildung nicht hoch genug. Bei einem zu hohen Anteil des Katalysators sinkt der Anteil an Silber so weit, dass die Leitfähigkeit nicht mehr ausreichend ist.

Günstigerweise enthält die Kathode ferner ein Bindemittel, dass ausgewählt ist aus Polytetrafluorethylen (PTFE), Polypropylen (PP), Polyvinylidenfluorid (PVDF) und/oder Polyethylen (PE). Bevorzugt wird PTFE als Bindemittel eingesetzt. Das Bindemittel ist hydrophob und stellt sicher, dass die Poren der Gasdiffusionselektrode nicht vollständig von dem Elektrolyt geflutet werden, so dass sich eine Dreiphasengrenze ausbilden kann.

Die Kathode enthält bevorzugt von 5 bis 15 Gew.% des Bindemittels, weiter bevorzugt von 8 bis 12 Gew.%.

Der Anteil an Silber/Silberoxid in der Kathode liegt bevorzugt bei mindestens 65 Gew.%, weiter bevorzugt bei mindestens 75 Gew.%.

Die Kathode der erfindungsgemäßen Sekundärzelle wird günstigerweise aus Silberpartikeln hergestellt, d.h. das System Silber/Silberoxid liegt nach der Herstellung im geladenen Zustand der Zelle vor. Bevorzugt wird die Kathode unter Verwendung von Silberpartikeln mit einem Partikeldurchmesser im Bereich von 5 bis 30 µm hergestellt, weiter bevorzugt im Bereich von 10 bis 20 µm.

Der Katalysator für die elektrochemische Sauerstoffbildung liegt bei der Herstellung der Kathode ebenfalls in Partikelform vor. Bevorzugt wird die Kathode unter Verwendung von Partikeln des Katalysators hergestellt, deren Partikeldurchmesser kleiner als 100 nm ist, bevorzugt kleiner als 50 nm.

Die Kathode weist vorzugsweise eine Porosität in einem Bereich von 40% bis 80% auf, weiter bevorzugt in einem Bereich von 50% bis 65%.

Die Kathode enthält vorzugsweise keinen Kohlenstoff. Sie ist somit korrosionsbeständig und behält ihre Stabilität auch nach einer Vielzahl von Lade- und Entladezyklen.

Die Kathode bzw. Gasdiffusionselektrode weist bevorzugt eine Dicke in einem Bereich von 350 bis 700 µm auf, bevorzugt in einem Bereich von 400 bis 500 µm.

Die Kathode der erfindungsgemäßen Sekundärzelle kann bevorzugt gemäß einem Verfahren hergestellt werden, wie es in der oben genannten Druckschrift WO 2015/124713 A1 beschrieben ist. Dabei werden Silberpartikel, Partikel des Katalysators und gegebenenfalls Bindemittelpartikel gemischt und unter hohem Druck verpresst. Anschließend kann die Mischung auf eine Temperatur oberhalb des Schmelzpunktes des Bindemittels erhitzt werden, um durch ein An- oder Aufschmelzen des Bindemittels die Partikel miteinander zu verbinden.

Bei der erfindungsgemäßen Sekundärzelle ist vorzugsweise die gesamt Stoffmenge an Silber in der Kathode in Form von Ag, Ag⁺ und Ag³⁺ kleiner als die gesamte Stoffmenge an Zink in der Anode in Form von Zn und Zn²⁺, wobei das Verhältnis Ag/Zn bevorzugt im Bereich von 1:5 bis 1:10 liegt. Die Stoffmenge an Zink, die über die Stoffmenge an Silber hinausgeht, korreliert mit der Stoffmenge an Sauerstoff, die während eines Ladezyklus gebildet bzw. während eines Entladezyklus reduziert wird.

Der Elektrolyt ist bei der erfindungsgemäßen Sekundärzelle bevorzugt eine alkalische wässrige Lösung, insbesondere eine Kaliumhydroxidlösung (KOH). Aufgrund der geringeren Reaktivität von Zink muss im Gegensatz zu Lithium-Luft-Batterien kein organischer Elektrolyt verwendet werden.

Die vorliegende Erfindung betrifft ferner einen Akkumulator, der eine oder mehrere erfindungsgemäße Sekundärzellen umfasst. Die einzelnen Zellen sind dabei in Reihe geschaltet. Vorzugsweise umfasst der Akkumulator ferner ein Gehäuse, in dem die eine oder mehrere Sekundärzellen angeordnet sind, sowie einen Anodenkontakt und einen Kathodenkontakt, die beim Entladen über einen Verbraucher und beim Laden über eine Spannungsquelle miteinander verbunden werden.

Weiterhin betrifft die Erfindung ein Verfahren zum Laden und ein Verfahren zum Entladen der erfindungsgemäßen Sekundärzelle oder des erfindungsgemäßen Akkumulators.

Bei dem erfindungsgemäßen Ladeverfahren erfolgt in einer ersten Phase des Ladevorgangs in der Kathode im Wesentlichen nur die Oxidation des vorhandenen Silbers zu Silberoxid, und in einer zweiten Phase zusätzlich oder ausschließlich die elektrochemische Bildung von Sauerstoff.

Bei dem erfindungsgemäßen Entladeverfahren erfolgt in einer ersten Phase des Entladevorgangs in der Kathode im Wesentlichen nur die Reduktion des vorhandenen Silberoxids zu Silber, und in einer zweiten Phase zusätzlich oder ausschließlich die elektrochemische Reduktion von Sauerstoff.

Beim Entladen erfolgt ein Übergang von der ersten Phase in die zweite Phase vorzugsweise dann, wenn in der Kathode kein Silberoxid mehr vorhanden ist oder wenn der Entladestrom einen bestimmten Wert überschreitet.

Die erfindungsgemäße Sekundärzelle bzw. der erfindungsgemäße Akkumulator können in verschiedenen Bereichen vorteilhaft eingesetzt werden. Von besonderem Interesse sind dabei mobile Anwendungen, bei denen es auf eine hohe Energiedichte ankommt, wie z.B. Elektrofahrzeuge, aber auch Anwendungen wie Hörgeräte, bei denen es auf ein möglichst geringes Volumen ankommt. Mögliche stationäre Anwendungen sind z.B. Akkumulatoren für die Speicherung von Wind und Sonnenenergie sowie allgemein für die Glättung von Leistungsspitzen in Stromnetzen.

Diese und weitere Vorteile der Erfindung werden anhand der nachfolgenden Ausführungsbeispiele näher erläutert. Es zeigen im Einzelnen:
- Figur 1:: eine schematische Darstellung einer erfindungsgemäßen Sekundärzelle; und
- Figur 2:: Zyklovoltammogramme einer Gasdiffusionselektrode mit einer Mischung aus Ag und Co₃O₄ und einer reinen Nickelelektrode.

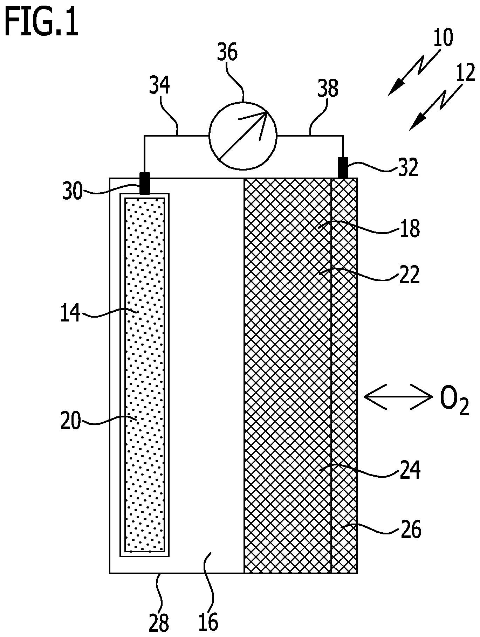

In Figur 1 ist der Aufbau einer insgesamt mit dem Bezugszeichen 10 bezeichneten Sekundärzelle gemäß der vorliegenden Erfindung schematisch dargestellt. Die Sekundärzelle 10 ist in Form eines Hybridsystems 12 aus einer Zink-Luft-Batterie und einer Silberoxid-Zink-Batterie ausgebildet. Sie umfasst eine Anode 14, die mit einem Elektrolyt 16 in Kontakt steht. Mit dem Elektrolyt 16 steht ferner auch eine Kathode 18 der Sekundärzelle 10 in Kontakt.

Die Anode 14 enthält Zink und/oder Zinkoxid 20, je nach Ladungszustand der Sekundärzelle 10, wobei im vollständig geladenen Zustand nur Zink und im vollständig entladenen Zustand nur Zinkoxid vorliegt.

Beim Elektrolyt 16 kann es sich insbesondere um einen wässrigen alkalischen Elektrolyten handeln. Beispielsweise kann eine 7-molare KOH-Lösung verwendet werden.

Die Kathode 18 ist als Gasdiffusionselektrode 22 mit einer porösen Struktur ausgebildet, um die elektrochemischen Reaktionen unter Beteiligung von Sauerstoff (O₂) an einer Dreiphasengrenze fest/flüssig/gasförmig zu ermöglichen. Die Kathode 18 enthält gemäß der Erfindung eine Mischung 24 aus Silber und/oder Silberoxid mit einem Katalysator für die elektrochemische Sauerstoffbildung, wie beispielsweise Co₃O₄. Optional kann die Kathode 18 auf einem Kathodenträger 26 angeordnet sein, der den Durchtritt von Sauerstoff ermöglicht. Der Träger 26 kann z.B. als Metallschaum, als Metallnetz oder als Streckmetall ausgebildet sein, insbesondere aus Edelstahl, Nickel oder Silber.

Optional kann die Sekundärzelle 10 (oder ein mehrere Sekundärzellen umfassender Akkumulator) ein Gehäuse 28 umfassen, aus dem ein mit der Anode 14 elektrisch leitfähig verbundener Anodenkontakt 30 herausragt. In analoger Weise kann mit der Kathode 18 ein Kathodenkontakt 32 elektrisch leitend verbunden sein, welcher aus dem Gehäuse 28 vorsteht.

Der Anodenkontakt 30 kann über eine Verbindungsleitung 34 mit einem Verbraucher 36 und über eine weitere Verbindungsleitung 38 mit dem Kathodenkontakt 32 verbunden werden, um einen Stromfluss von der Kathode 18 zur Anode 14 zu bewirken. Elektronen fließen dabei von der Anode 14 zur Kathode 18. Die Sekundärzelle 10 wird dabei entladen. Beim Laden der Sekundärzelle 10 fließen der Strom und die Elektronen in die jeweils andere Richtung.

Zur Herstellung einer Kathode 18 für eine erfindungsgemäße Sekundärzelle 10 werden gemäß einem Ausführungsbeispiel 70 Gew.% Silber-Pulver mit einer Partikelgröße von 10 bis 30 µm, 20 Gew.% Cobaltoxid-Pulver mit einer Partikelgröße von unter 50 nm und 10 Gew.% PTFE-Partikel mit einer Partikelgröße von etwa 4 µm gemischt und vorzugsweise in einer Messermühle vermahlen, um eine homogene Mischung zu erhalten. Beim Mischen entstehen Fäden aus dem Bindemittel, die ähnlich einem Spinnennetz die Mischung zusammenhalten. Eine Mahldauer der Inhaltsstoffe beträgt etwa 2 Sekunden.

Nach dem Mahlen wird die Mischung 24 in einen flexiblen Rahmen gefüllt, mit einem Edelstahlnetz bedeckt und zu einem festen Verbund verpresst, vorzugsweise mit einer hydraulischen Presse bei einem Druck von etwa 2,5 bar. Die Temperatur beim Pressen beträgt etwa 25 °C. Das Netz aus Edelstahl dient als Kathodenträger 26 einerseits zur Verbesserung der mechanischen Stabilität der Kathode 18 und andererseits als Stromkollektor.

In der beschriebenen Weise wurden Gasdiffusionselektroden 22 als Kathoden 18 für eine Sekundärzelle 10 mit einer Dicke im Bereich von 450 µm hergestellt.

Zur elektrochemischen Charakterisierung dieser Gasdiffusionselektroden wurde ein Zyklovoltammogramm gemessen, wobei eine reversible Wasserstoffelektrode (RHE) als Referenzelektrode und einer Platinelektrode als Gegenelektrode verwendet wurden. Als Elektrolyt wurde eine 7-molare KOH-Lösung eingesetzt und als Testgas reiner Sauerstoff.

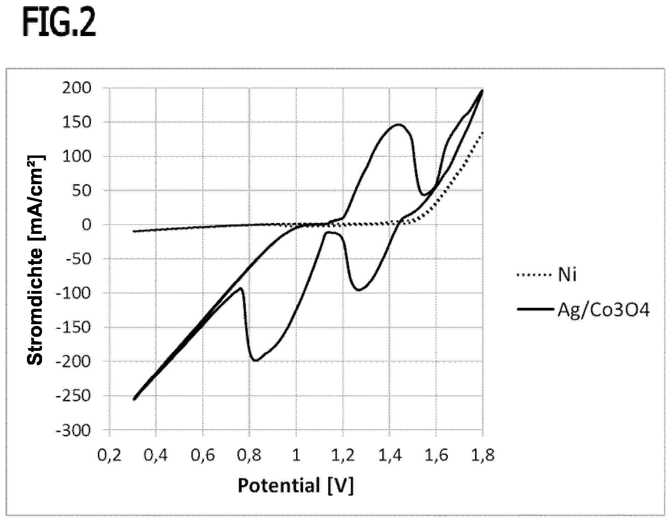

In der Figur 2 ist das Zyklovoltammogramm der oben beschriebenen Gasdiffusionselektrode mit Ag/Co₃O₄ dargestellt (durchgehende Linie), sowie zum Vergleich das unter denselben Bedingungen gemessene Zyklovoltammogramm einer reinen Nickelelektrode (gepunktete Linie). Aufgetragen ist die Stromdichte in mA/cm² über dem Potential Spannung bezogen auf die RHE in V.

Der Verlauf im unteren Teil des Diagramms für den Entladevorgang der Ag/Co₃O₄-Elektrode zeigt deutlich einen ersten Peak bei ca. 1,3 V für die Reduktion von AgO zu Ag₂O und einen zweiten Peak bei ca. 0,8 V für die Reduktion von Ag₂O zu Ag. Unterhalb dieser Spannung erfolgt die Reduktion von Sauerstoff (ORR). Entsprechende Peaks sind auch im oberen Teil des Diagramms für den Ladevorgang erkennbar, bei ca. 1,4 V für die Oxidation von Ag zu Ag₂O und bei ca. 1,7 V für die Oxidation von Ag₂O zu AgO, wobei letzterer nur schwach ausgeprägt ist. Oberhalb dieser Spannung erfolgt die Bildung von Sauerstoff (OER).

### Bezugszeichenliste

- 10: Sekundärzelle
- 12: Hybridsystem
- 14: Anode
- 16: Elektrolyt
- 18: Kathode
- 20: Zink/Zinkoxid
- 22: Gasdiffusionselektrode
- 24: Mischung aus Ag/Ag₂O/AgO und Katalysator
- 26: Kathodenträger
- 28: Gehäuse
- 30: Anodenkontakt
- 32: Kathodenkontakt
- 34: Verbindungsleitung
- 36: Verbraucher
- 38: Verbindungsleitung

## Patentansprüche

1. Sekundärzelle (10) in Form eines Hybridsystems (12) aus einer Zink-Luft-Batterie und einer Silberoxid-Zink-Batterie, umfassend eine Anode (14), eine Kathode (18) und einen Elektrolyt (16), wobei die Anode (14) Zink (Zn) und/oder Zinkoxid, ZnO, enthält, und wobei die Kathode (18) als Gasdiffusionselektrode (22) ausgebildet ist, die eine Mischung (24) aus Silber (Ag) und/oder Silberoxid, Ag₂O/AgO, mit einem Katalysator für die elektrochemische Sauerstoffbildung enthält,
**dadurch gekennzeichnet, dass** der Katalysator Cobaltoxid, Co₃O₄, enthält.

2. Sekundärzelle (10) nach Anspruch 1, wobei der Katalysator Co₃O₄ als einzigen Bestandteil enthält.

3. Sekundärzelle (10) nach Anspruch 1 oder 2, wobei die Kathode (18) einen Anteil von 5 bis 20 Gew.% des Katalysators enthält, bevorzugt von 10 bis 15 Gew.%.

4. Sekundärzelle (10) nach einem der vorhergehenden Ansprüche, wobei die Kathode (18) ferner ein Bindemittel enthält, das ausgewählt ist aus Polytetrafluorethylen (PTFE), Polypropylen (PP), Polyvinylidenfluorid (PVDF) und/oder Polyethylen (PE), wobei das Bindemittel bevorzugt PTFE ist.

5. Sekundärzelle (10) nach Anspruch 4, wobei die Kathode von 5 bis 15 Gew.% des Bindemittels enthält, bevorzugt von 8 bis 12 Gew.%.

6. Sekundärzelle (10) nach einem der vorhergehenden Ansprüche, wobei die Kathode (18) unter Verwendung von Silberpartikeln mit einem Partikeldurchmesser im Bereich von 5 bis 30 µm hergestellt ist, bevorzugt im Bereich von 10 bis 20 µm.

7. Sekundärzelle (10) nach einem der vorhergehenden Ansprüche, wobei die Kathode (18) unter Verwendung von Partikeln des Katalysators hergestellt ist, deren Partikeldurchmesser kleiner als 100 nm ist, bevorzugt kleiner als 50 nm.

8. Sekundärzelle (10) nach einem der vorhergehenden Ansprüche, wobei die Kathode (18) eine Porosität in einem Bereich von 40% bis 80% aufweist, bevorzugt in einem Bereich von 50% bis 65%.

9. Sekundärzelle (10) nach einem der vorhergehenden Ansprüche, wobei die Kathode (18) keinen Kohlenstoff enthält.

10. Sekundärzelle (10) nach einem der vorhergehenden Ansprüche, wobei die Kathode (18) eine Dicke in einem Bereich von 350 bis 700 µm aufweist, bevorzugt in einem Bereich von 400 bis 500 µm.

11. Sekundärzelle (10) nach einem der vorhergehenden Ansprüche, wobei die gesamte Stoffmenge an Silber in der Kathode in Form von Ag, Ag⁺ und Ag³⁺ kleiner ist als die gesamte Stoffmenge an Zink in der Anode in Form von Zn und Zn²⁺, und wobei das Verhältnis Ag/Zn bevorzugt im Bereich von 1:5 bis 1:10 liegt.

12. Sekundärzelle (10) nach einem der vorhergehenden Ansprüche, wobei der Elektrolyt (16) eine alkalische wässrige Lösung ist, insbesondere eine Kaliumhydroxidlösung (KOH).

13. Akkumulator, umfassend ein oder mehrere Sekundärzellen (10) nach einem der vorhergehenden Ansprüche.

14. Verfahren zum Laden einer Sekundärzelle (10) nach einem der Ansprüche 1 bis 12 oder eines Akkumulators nach Anspruch 13, wobei in einer ersten Phase des Ladevorgangs in der Kathode (18) im Wesentlichen nur die Oxidation des vorhandenen Silbers zu Silberoxid erfolgt, und in einer zweiten Phase zusätzlich oder ausschließlich die elektrochemische Bildung von Sauerstoff.

15. Verfahren zum Entladen einer Sekundärzelle (10) nach einem der Ansprüche 1 bis 12 oder eines Akkumulators nach Anspruch 13, wobei in einer ersten Phase des Entladevorgangs in der Kathode (18) im Wesentlichen nur die Reduktion des vorhandenen Silberoxids zu Silber erfolgt, und in einer zweiten Phase zusätzlich oder ausschließlich die elektrochemische Reduktion von Sauerstoff.

## Claims

1. Secondary cell (10) in the form of a hybrid system (12) of a zinc-air battery and a silver oxide-zinc battery, comprising an anode (14), a cathode (18), and an electrolyte (16), wherein the anode (14) contains zinc (Zn) and/or zinc oxide, ZnO, and wherein the cathode (18) is configured as a gas diffusion electrode (22) which contains a mixture (24) of silver (Ag) and/or silver oxide, Ag₂O/AgO, with a catalyst for the electrochemical oxygen evolution,
**characterized in that** the catalyst contains cobalt oxide, Co₃O₄.

2. Secondary cell (10) in accordance with Claim 1, wherein the catalyst contains Co₃O₄ as the sole component.

3. Secondary cell (10) in accordance with Claim 1 or 2, wherein the cathode (18) contains a proportion of 5 to 20% by weight of the catalyst, preferably of 10 to 15% by weight.

4. Secondary cell (10) in accordance with any one of the preceding Claims, wherein the cathode (18) further contains a binder which is selected from polytetrafluoroethylene (PTFE), polypropylene (PP), polyvinylidene fluoride (PVDF), and/or polyethylene (PE), wherein the binder is preferably PTFE.

5. Secondary cell (10) in accordance with Claim 4, wherein the cathode contains 5 to 15% by weight of the binder, preferably 8 to 12% by weight.

6. Secondary cell (10) in accordance with any one of the preceding Claims, wherein the cathode (18) is produced using silver particles with a particle diameter in the range of 5 to 30 µm, preferably in the range of 10 to 20 µm.

7. Secondary cell (10) in accordance with any one of the preceding Claims, wherein the cathode (18) is produced using particles of the catalyst, the particle diameter of which is smaller than 100 nm, preferably smaller than 50 nm.

8. Secondary cell (10) in accordance with any one of the preceding Claims, wherein the cathode (18) has a porosity in a range of 40% to 80%, preferably in a range of 50% to 65%.

9. Secondary cell (10) in accordance with any one of the preceding Claims, wherein the cathode (18) contains no carbon.

10. Secondary cell (10) in accordance with any one of the preceding Claims, wherein the cathode (18) has a thickness in a range of 350 to 700 µm, preferably in a range of 400 to 500 µm.

11. Secondary cell (10) in accordance with any one of the preceding Claims, wherein the entire amount of substance of silver in the cathode in the form of Ag, Ag⁺ and Ag³⁺ is less than the entire amount of substance of zinc in the anode in the form of Zn and Zn²⁺, wherein the ratio Ag/Zn is preferably in the range of 1:5 to 1:10.

12. Secondary cell (10) in accordance with any one of the preceding Claims, wherein the electrolyte (16) is an alkaline aqueous solution, in particular a potassium hydroxide solution (KOH).

13. Accumulator, comprising one or a plurality of secondary cells (10) in accordance with any one of the preceding Claims.

14. Method for charging a secondary cell (10) in accordance with any one of Claims 1 to 12 or an accumulator in accordance with Claim 13, wherein in a first phase of the charging process, substantially only the oxidation of the present silver to silver oxide occurs in the cathode (18), and in a second phase additionally or exclusively the electrochemical evolution of oxygen.

15. Method for discharging a secondary cell (10) in accordance with any one of Claims 1 to 12 or an accumulator in accordance with Claim 13, wherein in a first phase of the discharging process, substantially only the reduction of the present silver oxide to silver occurs in the cathode (18), and in a second phase additionally or exclusively the electrochemical reduction of oxygen.

## Revendications

1. Cellule secondaire (10) sous la forme d'un système hybride (12) d'une batterie zinc-air et d'une batterie oxyde d'argent-zinc, comprenant une anode (14), une cathode (18) et un électrolyte (16), dans laquelle l'anode (14) contient du zinc (Zn) et/ou de l'oxyde de zinc, ZnO, et dans laquelle la cathode (18) est réalisée comme une électrode de diffusion de gaz (22), qui contient un mélange (24) d'argent (Ag) et/ou d'oxyde d'argent, Ag₂O/AgO, avec un catalyseur pour la formation électrochimique d'oxygène, **caractérisée en ce que** le catalyseur contient de l'oxyde de cobalt, Co₃O₄.

2. Cellule secondaire (10) selon la revendication 1, dans laquelle le catalyseur contient du Co₃O₄ en tant que seul composant.

3. Cellule secondaire (10) selon la revendication 1 ou 2, dans laquelle la cathode (18) contient une part de 5 à 20 % en poids du catalyseur, de préférence de 10 à 15 % en poids.

4. Cellule secondaire (10) selon l'une quelconque des revendications précédentes, dans laquelle la cathode (18) contient en outre un liant, qui est sélectionné parmi le polytétrafluoroéthylène (PTFE), le polypropylène (PP), le polyfluorure de vinylidène (PVDF) et/ou le polyéthylène (PE), dans laquelle le liant est de préférence du PTFE.

5. Cellule secondaire (10) selon la revendication 4, dans laquelle la cathode contient de 5 à 15 % en poids du liant, de préférence de 8 à 12 % en poids.

6. Cellule secondaire (10) selon l'une quelconque des revendications précédentes, dans laquelle la cathode (18) est fabriquée en utilisant des particules d'argent avec un diamètre de particule dans la plage de 5 à 30 µm, de préférence dans la plage de 10 à 20 µm.

7. Cellule secondaire (10) selon l'une quelconque des revendications précédentes, dans laquelle la cathode (18) est fabriquée en utilisant des particules du catalyseur, dont le diamètre de particule est inférieur à 100 nm, de préférence inférieur à 50 nm.

8. Cellule secondaire (10) selon l'une quelconque des revendications précédentes, dans laquelle la cathode (18) présente une porosité dans une plage de 40 % à 80 %, de préférence dans une plage de 50 % à 65 %.

9. Cellule secondaire (10) selon l'une quelconque des revendications précédentes, dans laquelle la cathode (18) ne contient pas de carbone.

10. Cellule secondaire (10) selon l'une quelconque des revendications précédentes, dans laquelle la cathode (18) présente une épaisseur dans une plage de 350 à 700 µm, de préférence dans une plage de 400 à 500 µm.

11. Cellule secondaire (10) selon l'une quelconque des revendications précédentes, dans laquelle la quantité de substance totale d'argent dans la cathode sous forme de Ag, Ag⁺ et Ag³⁺ est inférieure à la quantité de substance totale de zinc dans l'anode sous forme de Zn et Zn²⁺, et dans laquelle le rapport Ag/Zn se situe de préférence dans la plage de 1:5 à 1:10.

12. Cellule secondaire (10) selon l'une quelconque des revendications précédentes, dans laquelle l'électrolyte (16) est une solution aqueuse alcaline, en particulier une solution d'hydroxyde de potassium (KOH).

13. Accumulateur, comprenant une ou plusieurs cellules secondaires (10) selon l'une quelconque des revendications précédentes.

14. Procédé de charge d'une cellule secondaire (10) selon l'une quelconque des revendications 1 à 12 ou d'un accumulateur selon la revendication 13, dans lequel dans une première phase de l'opération de charge dans la cathode (18), sensiblement seule l'oxydation de l'argent présent en oxyde d'argent a lieu, et dans une deuxième phase, en plus ou exclusivement la formation électrochimique d'oxygène a lieu.

15. Procédé de décharge d'une cellule secondaire (10) selon l'une quelconque des revendications 1 à 12 ou d'un accumulateur selon la revendication 13, dans lequel dans une première phase de l'opération de décharge dans la cathode (18), sensiblement seule la réduction de l'oxyde d'argent présent en argent a lieu, et dans une deuxième phase, en plus ou exclusivement la réduction électrochimique d'oxygène a lieu.
